# EUROPEAN PATENT APPLICATION

(11) **EP 3 932 191 A1**
(43) Date of publication of application: **05.01.2022**
(21) Application number: 21181655.8
(22) Date of filing: 25.06.2021
(51) Int. Cl.: A01K 1/01

(54) **ANIMAL SHED SYSTEM WITH AN AIR TRAP**

(30) Priority: 30.06.2020 NL 2025952
(71) Applicant: Lely Patent N.V., 3147 PB Maassluis (NL)
(72) Inventor: FEITSMA, Peter, 3147 PB Maassluis (NL); VAN DEN BERG, Karel, 3147 PB Maassluis (NL); REGELINK, Frank Gerard, 3147 PB Maassluis (NL)
(74) Representative: Octrooibureau Van der Lely N.V.

(57) **Abstract**

The invention relates to an animal shed system comprising an animal shed having an animal shed floor with a first and a second surface spaced apart, such that the floor has a thickness different from zero; a reservoir situated under the animal shed floor; a floor opening in the animal shed floor to allow manure to be dumped in the reservoir; a vehicle system comprising a manure-removal vehicle for removing manure from the animal shed floor and dumping the manure into the reservoir at the floor opening; and a device extending from the floor opening into the reservoir, the device forming a passageway between the floor opening and the reservoir, wherein the device is configured to prevent an airflow from the reservoir to the animal shed through the floor opening by blocking the passageway when in use.

## Description

### BACKGROUND OF THE INVENTION

### Field of the invention

The invention relates to an animal shed system with a wheeled manure-removal vehicle for removing manure from an animal shed floor and dumping the manure into a reservoir at an opening in the floor and a device extending from the floor opening into the reservoir, wherein the device is configured to prevent an airflow from the reservoir to the animal shed through the floor opening when in use.

### Description of the related art

Wheeled manure-removal vehicles or manure robots are used in animal sheds to remove manure, i.e. feces and urine, from the animal shed floor. Removing manure from the shed floor gives cleaner floors and thus cleaner hooves of the cows or other animals held in the shed. This attributes to the health and well-being of the animals.

International patent publication WO2013/010785 describes a manure-removal vehicle that collects manure by means of a scraper and this is subsequently sucked up via a manure extraction opening in the tank. The manure is collected in the manure sucking storage chamber of the vehicle. The manure sucking storage chamber is configured to discharge above the dumping opening in the floor of an animal shed. The manure in the tank of the vehicle will then run via the manure inlet opening of the vehicle into the manure pit.

A manure-removing vehicle as described above is used in animal sheds that have store a large quantity of manure, which forms an aggressive environment with toxic and flammable gasses. Such an environment is in need of extra safety measures to minimize the harm to the animals kept in the animal space, and any other users of the animal shed, such as a farmer.

It would therefore be desirable to provide an animal shed system that alleviates at least some of the perceived inconveniences of the prior art.

### BRIEF SUMMARY OF THE INVENTION

According to the invention, there is provided an animal shed system comprising
- an animal shed having an animal shed floor with a first and a second surface spaced apart, such that the floor has a thickness different from zero;
- a reservoir situated under the animal shed floor;
- a floor opening in the animal shed floor to allow manure to be dumped in the reservoir;
- a vehicle system comprising a manure-removal vehicle for removing manure from the animal shed floor and dumping the manure into the reservoir at the floor opening; and
- a device extending from the floor opening into the reservoir, the device forming a passageway between the reservoir and the floor opening, wherein the device is configured to prevent an airflow from the reservoir to the animal shed through the floor opening by blocking the passageway when in use.

The animal shed is used for animal husbandry, in particular for cattle, such as dairy cows. Traditionally, cattle is kept in an animal space, such as the animal shed. Cattle, in particular cows, will excrete urine and feces that end up on the floor of the shed as manure (the mixture of urine and feces). The manure-removal vehicle removes the manure and dumps the manure into the reservoir. The invention may advantageously be applied to sheds with floors that are closed. With slatted floors and other floors comprising openings, less manure will be collected by the manure-removal vehicle. The manure-removal vehicle may be a wheeled manure-removal vehicle, such as a manure suction robot, or a pulled manure slide.

In the reservoir, dangerous manure gases may be released from the manure. These gasses may include hydrogen sulfide, hydrogen cyanide, carbon dioxide, ammonia and methane. Peaks in concentration in the reservoir can result in fatal situations for humans and animals. An additional aggravating feature is that these gases displace oxygen, which can result in a life-threatening situation. In addition, some gases are flammable and may cause an explosion. Areas that pose extra danger are the confined spaces in the reservoir or manure cellar, but also the immediate surroundings such as the animal space.

Hydrogen sulfide (H₂S) is the greatest danger for humans and animals. When this gas is present in low concentration, it spreads an odor of rotten eggs. In high concentrations is no longer be perceived, because it paralyzes the olfactory nerve. This when it becomes life threatening because death occurs immediately at a slightly higher concentration. Hydrogen sulfide is heavier than air, so it stays low to the ground. However, small animals like dogs or cats, but also small children are more likely to be caught by the gas.

Gaseous hydrogen cyanide or prussic acid (HCN) can enter the body through both breathing and skin, and is already deadly at very low concentrations. The symptoms that occur are unconsciousness, breathlessness and cardiac arrest. It is slightly less common than hydrogen sulfide, although they are usually found together. Hydrogen cyanide is also flammable, so that it can attribute to the danger of an explosion.

Methane (CH₄) is extremely flammable and can form explosive mixtures with air or other gasses. Methane is the most common gas formed from manure. It is lighter than air and is therefore usually at the top of the well or basement. It can explode very easily or give flash flames. A simple spark can be enough to cause a catastrophe. Methane can - if it occurs in large concentrations - also expel the oxygen from an environment and indirectly lead to suffocation, certainly because it often occurs together with carbon dioxide that can also have a choking effect.

Carbon dioxide (CO₂) is formed during the decomposition or combustion of organic matter in an atmosphere with oxygen. It is also one of the main components of biogas. Carbon dioxide is particularly dangerous when it occurs in high concentrations. It is an odorless gas and is therefore sometimes called the silent killer. It often occurs together with carbon monoxide (CO). Carbon monoxide is very toxic because it replaces oxygen in the red blood cells. Carbon dioxide is less of a problem gas in the context of manure gases, unless in the manure pit itself. In the animal shed, it is usually diluted quickly. Because the gas is heavier than air, it can accumulate in the manure cellar, even if it has been empty for a while.

Ammonia (NH₃) is formed during the breakdown of nitrogen-rich compounds (proteins and urine). It is lighter than air and usually evaporates fairly quickly. It is therefore also one of the gases that can cause a lot of odor nuisance in a stable. At low concentrations, it irritates eyes and mucous membranes. In higher concentrations, it can be fatal. Because of the strong pungent odor, ammonia is easily perceived so that measures can be taken in time, for example by ventilation.

In order to avoid the flow of these gasses to the animal shed, the device extending from the floor opening into the reservoir, is configured to prevent an airflow from the reservoir to the animal shed through the floor opening when in use. In use, stationary manure in the device will close the passageway from the reservoir via the floor opening to the animal shed and thus prevent an airflow from the reservoir to the animal shed. The airflow may thus also include at least one of the above-mentioned gasses.

The device may further comprise a grating or grid provided over at least part of a cross sectional area of the device. The grating may be provided such that strange objects, like a cattle collar or a stone, that end up in the collected or dumped manure will not enter the device and/or the reservoir, but will be retained at the grating and can be removed without much ado. Furthermore, the grating may act as a safety element, such that a person, like a child, and/or a small and/or young animal (a calf, a dog or a cat) are hindered to accidentally fall in the device and/or reservoir.

In order to further enhance the safety near the floor opening, the system may further comprise a safety structure that at least envelopes the area of the floor opening, and is attached to the animal shed floor. It is preferred that when a wheeled manure-removal vehicle is used to remove manure from the floor, that the safety structure will allow the wheeled manure-removal vehicle to access the floor opening. The safety structure may be a safety cage, for instance made of interconnected frames, but any three-dimensional that would allow access to the floor opening for the wheeled manure-removal vehicle, and would prevent access to the floor opening for animals and/or users would suffice.

In case the vehicle system comprises the wheeled manure-removal vehicle, it may further comprises a charging station for the wheeled manure-removal vehicle. The vehicle may be provided with batteries to power the motor of the vehicle. These batteries need to be recharged regularly to have a functioning vehicle. It is preferred that the charging station is provided at or on the safety structure, at a distance different from zero from the floor opening. As described above, the safety structure at least envelopes the floor opening, meaning that when the charging station is provided at or on the safety structure, the distance between the charging station and the floor opening is relatively short, but not zero. In order for the batteries to be charged, the vehicle and the charging station need to be into contact with each other for conductive charging with electrical contacts. It is during charging that the transferred electricity may form sparks. It is the combination of this sparking with any flammable gasses, as described above, from the reservoir that may cause an explosion.

The device may comprise a tube extending from the floor at the floor opening, and towards a bottom of the reservoir, wherein the tube has a free end ending at a distance different from zero from a bottom of the reservoir, the free end opening out into the reservoir, forming the passageway between the animal shed floor and the reservoir wherein in use an airflow from the reservoir to the animal shed is prevented when a manure or feces level in the reservoir extends into the tube through the free end.

The tube is configured to allow manure into the reservoir, but additionally to prevent an airflow from the reservoir to the animal shed through the floor opening when in use. When the manure in the reservoir reaches at least the same height as the free end of the tube, the manure blocks the passageway between the animal shed and the reservoir, and the air cannot flow from the reservoir to the animal shed. When the manure level is even higher, the free end will be overlapped with manure, thus blocking the airflow as well.

The tube may have a cylindrical, rectangular, or any other shaped cross section.

It is preferred that the cross section of the tube is preferably commensurate with the peripheral shape of the floor opening, i.e. the cross-sectional shape and dimensions of the tube coincide with a shape and dimensions of the floor opening. Alternatively, the cross section of the tube may have an area larger than that of the floor opening, thereby covering the area of the floor opening fully, and may even extend beyond the area of the floor opening. In this latter case, the shape of the cross section of the tube can deviate from that of the peripheral shape of the floor opening, e.g. combining a rectangular floor opening with a cylindrical tube having a circular cross section that is larger than the floor opening in all dimensions, or vice versa.

The tube may be made of plastic, metal (e.g. stainless steel) or any other suitable material that can withstand the harsh environment of a manure pit. The tube may be a rigid or a flexible tube. In case of a flexible tube, a foil material may be used. A flexible tube is preferably provided with a tensioning means, such as a load or weighting, or tension threads that connect the free end of the tube with the base of the reservoir or with the shed floor at one or multiple locations along the periphery of the tube at the free end. Such tensioning means can be used to stretch the tube over its full length, and/or to overcome at least any upward force or lift from the manure, and have the flexible tube extend into the manure when in use. The tensioning means may be provided at the free end of the tube.

In another embodiment, the device comprises a tube extending from the floor at the floor opening, and towards a bottom of the reservoir, wherein the tube has a free end ending at a distance different from zero from a bottom of the reservoir, the tube having a base that closes off its free end, and forms a container with the peripheral sidewall that encloses an interior of the device, wherein the sidewall comprises an outlet opening towards the reservoir, the outlet opening being located at a distance from zero from the base; and the device further comprises a cover extending from the floor opening into the tube and covering the outlet opening and part of the base, wherein an end edge of the cover is at least at a same height as a lower edge of the outlet opening, which lower edge is at a distance different from zero from the base, thereby forming the passageway from the floor opening to the outlet opening, wherein in use the airflow from the animal shed to the reservoir is prevented when a manure or feces level in the tube is at a similar height as the end edge of the cover or higher, thereby blocking the passageway.

In this embodiment, the tube extends into the reservoir and is closed at the free end. The closed free end of the tube may be regarded as a base. Adding the base to the tube transforms the tube into a container, like a box or a bag, having a base and an upstanding sidewall. The passageway for the manure to the reservoir or manure pit is additionally formed by the outlet opening in the sidewall. In reverse, the outlet opening ensures the passageway for the manure gasses from the reservoir to the floor opening. The tube may end above a manure level in the reservoir, or in the manure, such that the base and part of the tube are in contact with the manure in the reservoir. In this embodiment, the tube has at least one outlet opening. In the case of multiple outlet openings, it is preferred that they are located at separate locations at a similar height along the sidewall. Preferably, the lower edges of the multiple outlet openings are at the same height.

In another embodiment, the device comprises a tube extending from the floor at the floor opening, and towards a bottom of the reservoir, wherein the tube has a free end ending at a distance different from zero from the bottom of the reservoir, the tube having a base that closes off its free end, and forms a container with a peripheral sidewall that encloses an interior of the device, wherein the sidewall comprises an outlet opening towards the reservoir, wherein the outlet opening extends from the base towards the floor opening; and the device further comprises a cover extending into the tube and covering the outlet opening and part of the base, thereby creating a passage from the floor opening to the outlet opening, wherein the cover comprises a first portion and a second portion, wherein the second portion is hingeably attached to the first portion, wherein in use the second portion rests against a lower edge of the outlet opening and/or an amount of manure in the passageway, thereby blocking the passageway from the animal shed to the reservoir and preventing an airflow from the reservoir to the animal shed through the floor opening.The cover may be formed as a funnel that narrows towards the base of the tube. The cover and tube may be formed integrally, or can be formed as separate parts that are assembled later to form the device. Preferably, the cover is removably assembled with the tube, such that the cover can be removed for maintenance and/or replacement. The cover may be attached to the tube or to the floor, for instance at an edge of the floor opening.

A funnel shaped cover may be particularly advantageous when the tube has more than one outlet opening. Preferably, the sidewall has at least two outlet openings at separate locations of the sidewall at the same height, and the cover is funnel shaped, and extends into the tube covering all outlet openings in the sidewall. When the sidewall has two or more, but an even number of, outlet openings, it is preferred that the outlet openings are located at the same height and in opposite pairs, i.e. every two outlet openings are located opposite of each other, along the side wall.

Furthermore, the cover may extend from the floor at the floor opening or from the sidewall of the tube at a location near the floor opening. 'Near the floor opening' would mean a location at the sidewall situated at least above the outlet opening.

A second end of the cover, opposite of the first end, is at least level with the lower edge of the outlet opening, i.e. the cover extends over the full outlet opening. The cover extends over the outlet opening at a distance different from zero from the sidewalls and the base of the tube, i.e. space is kept between the base and the cover, such that the passageway is created between the container and the cover from the floor opening to the reservoir via the outlet opening. Preferably, the passageway is releasing towards the reservoir for any larger object that enters the device through the floor opening, either purposely or accidentally. The releasing passageway may start with a smallest opening between the sidewall and the cover, and extends via openings with increasing area to a largest opening, which is the outlet opening towards the reservoir. As such, any object that passes the smallest opening will thus also be able to pass any further openings along the passageway to finally end up in the reservoir.

The cover in combination with stationary manure in the tube is used to create an airlock or air trap in the passageway. In use, the manure will stop pouring into the reservoir when the level of manure has reached the lower edge of the outlet opening, and will remain in the tube. The outlet opening is covered by the cover that extends into the container to at least the lower edge of the outlet opening. In other words, the end edge of the cover is at least at the same height as the lower edge of the outlet opening. The stationary manure in the tube will thus block the passageway for the airflow created between the cover and the tube. Preferably, the end edge of the cover extends beyond the lower edge of the outlet opening. When the cover extends beyond the lower edge of the outlet opening, in use, a larger part of the cover may come into contact with the manure. The cover may have a first side facing the floor opening, and an opposite second side facing the outlet opening. The cover may be in contact with the manure at at least a part of the first side, or at at least a part of the first and the opposite second side.

The cover may stretch from the floor opening into the container, for instance at an inclination between 0 and 90 degrees with respect from the floor, for instance at an angle between 30 to 60 degrees, i.e. in a slanted downward fashion toward the base of the container. Alternatively, or in addition, the cover may comprise two portions, of which a first portion may stretch at a first angle with respect to the floor and a second portion may stretch at a second angle with respect to the first portion. The angles may be different or similar, wherein the first and second angles are different, i.e. not the same. Preferably, the cover covers the base fully along of one of a longitudinal direction and a width direction, and partly along another of the longitudinal direction and the width direction. Whereas the cover covers at least the outlet opening of the tube, the cover may extend over the full length or width of the floor opening, and over part of the other of the width or length of the floor opening. The full extent of the cover may depend on the location and/or the dimensions of the outlet opening, in either a longitudinal direction (length) or a transverse direction (width). Preferably, the outlet opening extends over the full width and/or length of the tube, and from the floor towards the base. The outlet opening is limited by the lower edge of the outlet opening that is at a distance different from zero from the base. The outlet opening may extend from the floor towards the base.

The tube may comprise an upper part and a lower part. Preferably, the sidewall converges towards the base, thus forming a trough-shaped lower part of the container. The sidewall may converge at the longitudinal and/or transverse sides to form the trough-shaped lower part. As such, the base may cover a smaller area than the cross-sectional area at the non-converged sidewalls. A trough-shaped lower part of the container may enhance the flow of the manure to the outlet opening when dumped in the container through the floor opening. Preferably, the lower edge of the outlet opening coincides with an upper edge of the trough-shaped lower part of the container.

### BRIEF DESCRIPTION OF THE DRAWINGS

Figure 1 shows a schematic view of an animal shed system with an embodiment of the device.
Figure 2 shows a schematic view of a second embodiment of the device.
Figures 3A and B each show a schematic view of a further embodiment of the device.
Figures 4A and B each show a schematic view of another embodiment of the device.
Figure 4C shows a detail of Fig. 4A.
Figure 5 shows a perspective view of another embodiment of the animal shed system.
Figure 6 shows a perspective view of part of a further embodiment of the animal shed system.
Figure 7 shows a schematic view of a further embodiment of the device.

### DESCRIPTION OF ILLUSTRATIVE EMBODIMENTS

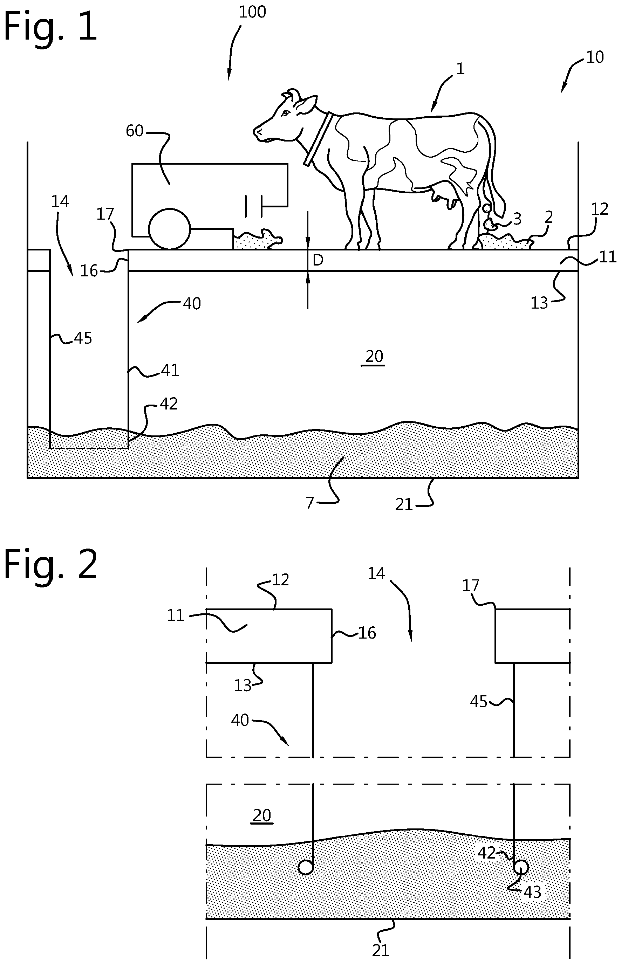

Figure 1 shows a schematic view of an animal shed system 100 with an embodiment of the device 40. The animal shed system 100 comprises an animal shed 10. The animal shed 10 is used for animal husbandry, in particular for cattle, shown as a cow 1 in Fig. 1. The animal shed 10 has an animal shed floor 11 having a first and a second surface 12, 13 spaced apart, i.e. the floor 11 has a thickness D that is different from zero, i.e. not zero. The first surface 12 is a living or walking surface of the floor 11 for the animals and other users. The floor 11 has a floor opening 14 extending from the first to the second surface 12, 13, i.e. it is a through hole. The system further comprises a reservoir 20, i.e. a manure storage space or manure cellar, situated under the animal shed floor 11. The floor opening 14 in the animal shed floor 11 allows manure 7 to be dumped in the manure-storage space 20. Apart from the floor opening 14, the floor 11 is closed, i.e. the floor 11 is a closed floor and does not comprises slotted openings or the like.

The device 40 comprises a tube 41 that extends from the floor 11, in the floor opening 14, and into the manure 7 in the reservoir 20. The tube 41 comprises a peripheral sidewall 45 that encloses an interior of the device and forms the periphery of the tube. The tube 41 ends in the manure 7 with a free end 42 at a distance different from zero from a bottom or base 21 of the reservoir 20. The free end 42 opens out to the reservoir 20. As shown in Fig. 1, the free end 42 sticks into the manure 7 (i.e. the level of the manure 7 is higher than the distance or spacing between the free end 42 and the base 21), and thus closes the flow path of any gasses present in the reservoir 20 to the animal shed 10. The device 40 thus prevents an airflow or gas flow from the reservoir 20 to the animal shed 10 through the floor opening 14 when in use.

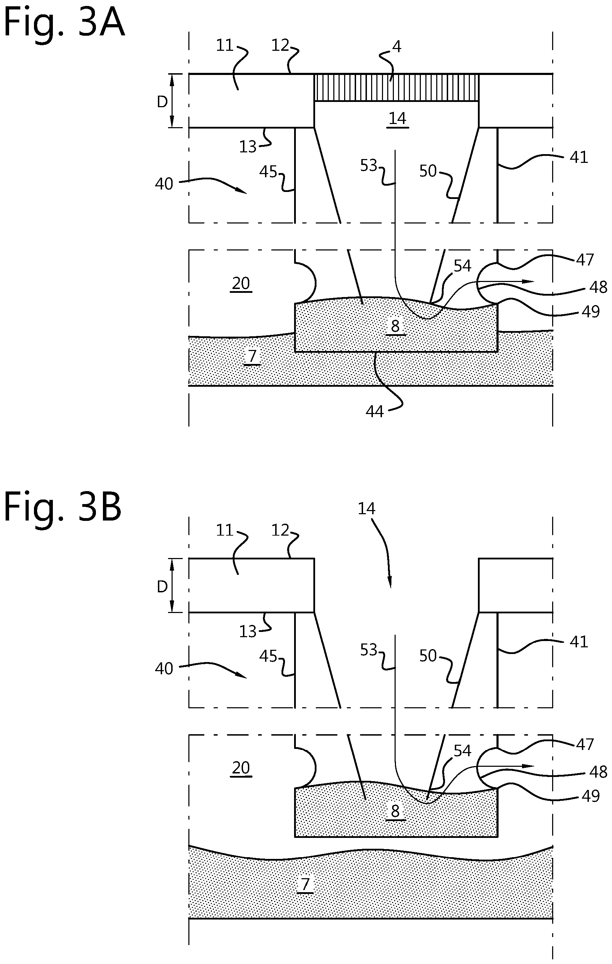

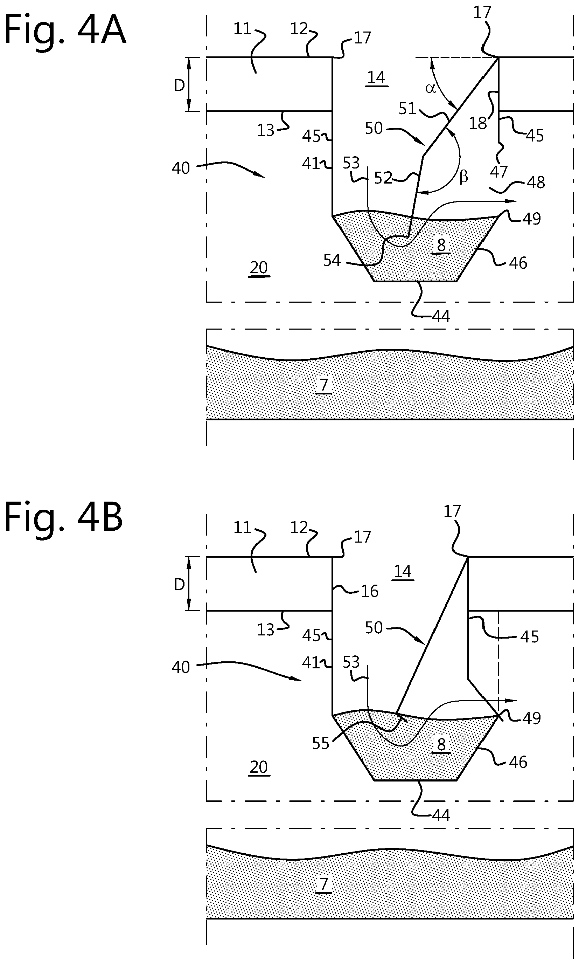

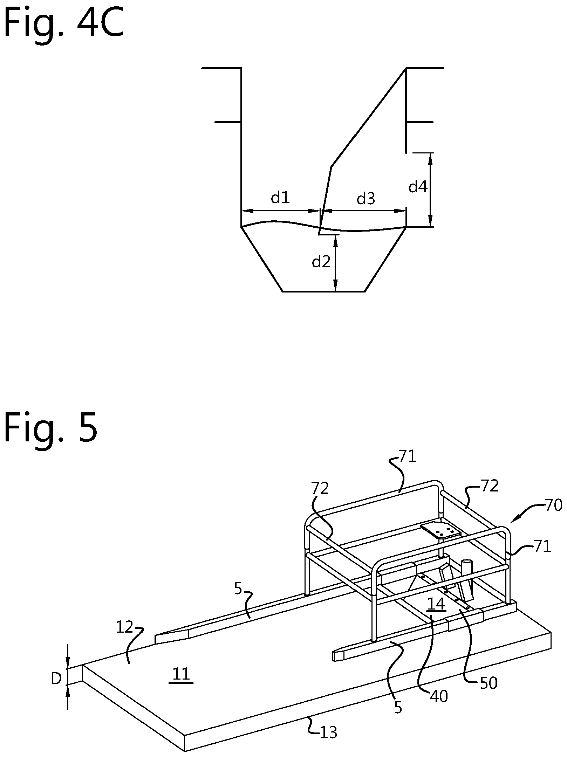

In use, the animal excretions (i.e. feces 2 and urine 3) are dumped through the floor opening 14 into the manure cellar 20 via the device 40. The device thus forms a passageway 53 between the animals shed 10 and the reservoir 20, see Figures 3 and 4. When the level of the manure 7 has reached either a level of the free end 42 of the tube 41 or a height beyond the free end 42 of the tube 41, the passageway 53 through the floor opening 14 to the reservoir 20, and vice versa, is blocked with manure.

The free end 42 of the tube 41 may be tensioned with a weight or any other suitable tensioning means 43, in particular when the tube 41 is a flexible tube or made of a flexible material, see Fig. 2. Tensioning the tube 41 may assist with retaining the tube and the free end 42 with respect to the floor opening and preventing floating of the tube 41 under the influence of any upward force or lift from the feces or manure.

An autonomous manure suction robot 60 runs between the animals 1 over the floor 11. This robot 60 removes the urine 3 and feces 2 from the walking surface 12 of the floor 11, and then dumps this mixture of urine 3 and feces 2 (i.e. manure) in the manure storage space 20 through the device 40. Additionally, or alternatively, the collected manure 7 can be further processed by, for example, drying or pressing whereby manure fibers are removed from the feces 2.

Contact between feces 3 and urine 2 provides an enzymatic conversion reaction of urea in the urine 3 to ammonia. When ammonia forms on the floor 11, it can easily escape to the environment. By using a suction robot 60 for this purpose, the urine 3 and feces 2 are removed from the floor 11 on site. This has the advantage that the freshly excreted feces 2 and urine 3 are on the floor 11 for a relatively short period, thereby reducing the amount of ammonia formed on the floor surface 12.

The tube 41, as shown Fig. 1, has dimensions that coincide with those of the floor opening 14. In addition, a first periphery 16 of the floor opening coincides with a second periphery of the tube formed by the sidewall 45.

Figure 2 shows an embodiment of the device 40 where the tube 41 has dimensions that are larger than the floor opening 14, such that the first and second peripheries do not coincide, either in shape, dimensions and/or size. The tube 41 extends beyond the first periphery 16 of the floor opening 14. Fig. 2 shows a device 40 comprising a tube 41 having a weighting 43 at its free and open end 42 to prevent lifting of the tube end by the manure 7 in the reservoir 20. In order to successfully prevent an airflow from the reservoir 20 to the animal shed 10, the free end 42 of the tube 41 extends into the manure, i.e. an end edge of the free end 42 of the tube 41 is inserted in the manure 7 in the reservoir 20.

Figure 3A shows the device 40 comprising a tube 41 that has a free end 42 that is closed with base 44. The sidewall 45 of the tube 41 is provided with two outlet openings 48 that open out to the reservoir 20. The cover 50 extends into the tube 41, and is funnel shaped. The end edges 54 of the cover 50 are level with a lower edge 49 of the outlet opening 48. Alternatively, the end edges 54 of the cover 50 extend beyond the lower edge 49 of the outlet opening 48, i.e. the end edges 54 are closer to the base 44 of the tube 41 than the lower edge 49, see Fig. 3B. In use, manure 8 will enter the tube 41. First, the tube 41 will fill up from the base 44, until the manure level is higher than the lower edge 49 of the outlet opening 48. As more manure 8 will enter the tube 41, the manure 8 will flow into the reservoir 20, until the manure level is at the same height as the lower edge 49 of the outlet opening 48. The remaining manure 8 will block the passageway 53 between the floor opening 14 and the reservoir 20 that is created in the device 40.

Fig. 3A further shows a grating or grid 4 in the floor opening 14, extending over the full area of the floor opening 14. The grating 4 is provided such that strange objects, like a cattle collar or a stone, that end up in the collected or dumped manure will not enter the device 40 and/or the reservoir 20, but will be retained at the grating 4 and can be removed without much ado. Furthermore, the grating 4 acts as a safety element, such that a person, like a child, and/or a small and/or young animal (a calf, a dog or a cat) are hindered to accidentally fall in the device 40 and/or reservoir 20.

The tube 41 can extend into the manure 7 in the reservoir 20, as shown in Fig. 3A, such that the remaining manure 8 in the tube 41 acts as a weighting against floating of the device 40 (in case of a flexible tube or device). Fig. 3B shows that the tube 41 can also end above the level of the manure 7 in the reservoir 20. The remaining manure 8 can then be used as a tensioning means, in particular when a flexible tube or device is used.

Figures 4A and 4B (together Figure 4) show a device 40 that comprises a tube 41 again having the peripheral sidewall 45 that encloses an interior of the device, and the base 44 that closes off its free end 42, in this case forming a container. In this embodiment, the free end 42 does not open out into the manure cellar 20 as in Figs. 1 and 2. The sidewall 45 extends from the base 44 towards the floor 11. The device 40 is connected to the floor 11 at the opening 14. The sidewall 45 is provided with an outlet opening 48 that opens towards the reservoir 20. The outlet opening 48 extends from an upper edge 47 that is at a distance different from zero from the floor 11, i.e. from the second surface 13, to a lower edge 49 that is at a distance different from zero from the base 44 of the tube 41.

A lower part 46 of the sidewall 45 converges towards the base 44. The converging of the lower part 46 can be along the longitudinal and/or transverse parts of the sidewall. The device 40 further comprises a cover 50 that extends from an edge 17 of the floor opening 14 towards the base 44 of the tube 41. The cover 50 extends over the outlet opening 48 in the sidewall 45. The cover 50 also extends over part of the base 44, creating the passage or passageway 53, shown as an arrow in Fig. 4, between the sidewall 45, the base 44 and the cover 50. The remaining manure 8 in the tube 41 closes the passageway 53 when a manure level is at a similar or higher height as an end edge 54 of the cover 50, as shown in Fig. 4.

In Fig. 4A, the cover 50 comprises a first portion 51 that extends from the edge 17 of the floor opening 14 into the tube 41, and a second portion 52 that extends from the first portion 51 into the tube 41. The first portion 51 is at an angle α *(alpha)* with the floor 11, and the second portion 52 is at an angle β *(beta)* with respect to the first portion 51. The end edge 54 of the cover 50 extends into the manure 8, and the passageway 53 is blocked for any gas from the reservoir.

Figure 4A shows that the angle α *(alpha)* is an acute or sharp angle may be, i.e., and the angle β *(beta)* is a blunt or obtuse angle. The angle α *(alpha)* can be between 0 and 90 degrees with respect from the floor, for instance at an angle between 30 to 60 degrees, or about 50-55 degrees. The angle β *(beta)* can range from less than 180 degrees to about 120 degrees, or about 150-160 degrees. Both angles can be freely chosen within the given ranges, but with the additional requirement that a free end edge 54 of the cover 50 (at the second portion 52 of the cover) is either at the same height of a lower edge 49 of the outlet opening 48, or extends beyond the lower edge 49, while maintaining the passageway 53 between the tube 41 and the cover 50. A further requirement may be that the passageway 53 is releasing towards the outlet opening, i.e. the opening between the sidewall and the free end of the cover (d1) is the smallest opening of the passageway 53, and the outlet opening 48 (d4) would be the largest opening of the passageway 53, wherein the opening between the free end 54 and the base 44 (d2) and the opening between the free end 54 and the lower edge 49 of the outlet opening 48 (d3) would have respective increasing dimensions, see also Fig. 4C. In other words, d1 is smaller than d2, d2 is smaller than d3, d3 is smaller than d4, such that d1 is the smallest opening in the passageway, and d4 is the largest opening in the passageway (d1 < d2 < d3 < d4).

In Fig. 4B, a projected second periphery of the tube 41, indicated by the dotted line, extends beyond the first periphery 16 of the floor opening 14. Fig. 4B further shows an end flange 54 at the end edge of cover 50. The end flange 54 extends into the manure 8 that remains in the tube 41.

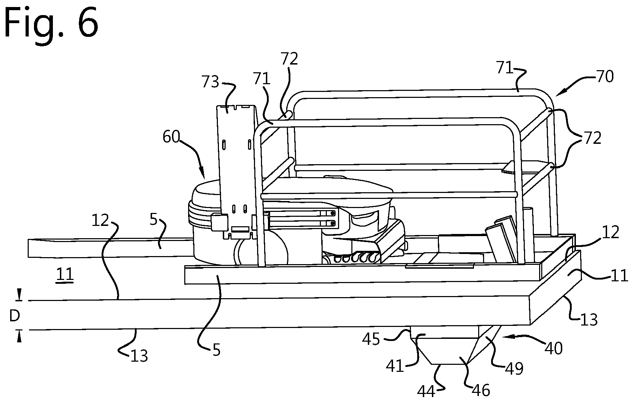

Figures 5 and 6 show part of the animal shed system 100, now including a safety structure 70, shaped as a safety cage, that is provided to surround or envelope the floor opening 14. The safety cage 70 is a three-dimensional frame made of two side frames 71 that are interconnected with bars 72 extending between the two side frames 71. The safety cage 70 is open to accommodate the manure suction robot 60 and allows access to the floor opening 14, as shown in Fig. 6. The manure suction robot 60 is guided towards the floor opening 14 with guide rails 5 on both sides of the floor opening 14. The guide rails 5 are here used as a part of the safety cage 70, i.e. a structure on which the safety cage 70 is built, but can be used as a separate part of the animal shed system 100, too. The safety cage 70 is used to further enhance the safety near the floor opening 14. As shown, the safety cage 70 envelopes the area of the floor opening 14, and is attached to the animal shed floor 11. The safety cage 70 has an entrance side with an entrance opening where the manure suction robot 60 is allowed to enter the cage to reach the floor opening 14 for dumping manure in the reservoir 20, see Figure 6. The entrance side can be relatively close to the floor opening 14, e.g. less than half a length dimension of the manure suction robot 60, or relatively far at a distance at least a length dimension of the manure suction robot 60, from the floor opening 14. Fig. 6 shows that the safety cage 70 has a charging station 73 at the entrance side. The charging station 73 is located at a distance different from zero from the floor opening 14, in this case the distance between the entrance side or opening and the floor opening 14. The charging station 73 is used to regularly recharge the battery or batteries of the manure suction robot 60.

The device 40 as shown in Figs. 4 to 6 is also a safety means for the floor opening 14, as the cover 50 already reduces the area of the floor opening 14, and the base 44 of the tube 41 closes off the full access to the reservoir. It is preferred that the embodiments shown in Figs. 3-6 are made of a rigid material, preferably a plastic material or a metal, such as stainless steel.

As shown in Fig. 6, the device 40 is also a safety means to block flammable gasses from the charging station 73. Upon connection between the charging station 73 and the manure suction robot to have power transferred, electric sparking can occur. These sparks could lead to explosions and/or fire with a fully open floor opening, i.e. without a device 40 as described above. Any flammable gasses that have developed in the manure cellar from the manure are blocked by the manure in the device 40 from entering the animal shed where the charging station 73 is.

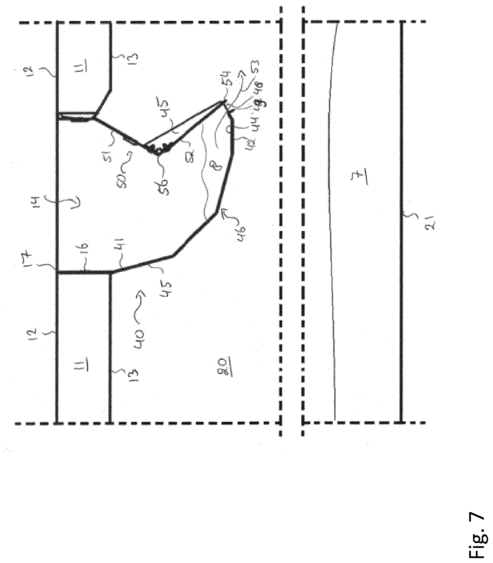

Figure 7 shows another embodiment of the device 40 that is a variation to the embodiments shown in Fig. 4. The first portion 51 and the second portion 52 of the cover 50 are now at an angle γ *(gamma)* such that the free end 54 of the cover at the second portion 52 now extends into the reservoir 20. The second portion 52 is hingeably connected to the first portion 51 through a hinge 56.

When the level of the manure 8 in the device rises during use, the pressure on the second portion increases. When the level of manure 8 in the device 40 is at a sufficient height, the pressure is high enough to overcome the gravitation acting on the second portion 52. The manure then pushes the second portion into a rotational movement along the hinge 56. The outlet opening 48 is thus opened and the manure may flow into the reservoir 20. As the level of the manure 8 in the device 40 is lowered, the pressure against the second portion 52 is reduced, and the second portion 52 moves in a downward rotation along the hinge 56 to close or at least decrease the outlet opening 48. A certain level of manure 8 will remain in the device 40 to close off the remaining outlet opening 48 and as such prevent an airflow from the reservoir 20 to the animal shed 10 through the floor opening 14 by blocking the passageway 53 when in use.

Initially, the second portion 52 will rest on the lower edge 49 of the outlet opening 48, such that the outlet opening 48 is closed. In use, it is likely that some manure 8 will stick to the lower edge 49 and/or the second portion 52 such that the outlet opening 48 cannot be fully closed by the second portion 52, but will be closed by the remaining level of manure 8 in the device 40.

**LIST OF ITEMS**

| | |
|---|---|
| 1. Animal (cow) | 50. Cover |
| 2. Feces | 51. First portion of cover |
| 3. Urine | 52. Second portion of cover |
| 4. Grating or grid | 53. Passageway |
| 5. Guide rails | 54. End edge of cover |
| 7. Manure in reservoir | 55. End flange of cover |
| 8. Manure in device | 56. Hinge |
| | |
| 10. Animal shed or space | |
| 11. Floor | 60. Manure suction robot |
| 12. First or living surface | |
| 13. Second surface | 70. Safety cage |
| 14. Floor opening | 71. Side frame |
| 16. Periphery of the floor opening | 72. Connecting bar |
| 17. Edge of the floor opening | 73. Charging station |
| | |
| 20. Reservoir or manure cellar | 100. Animal shed system |
| 21. Bottom of reservoir | |
| | |
| 40. Device | |
| 41. Tube | |
| 42. Free end of the tube | |
| 43. Tensioning means or weight | |
| 44. Base | |
| 45. Sidewall of the tube | |
| 46. Lower part of sidewall | |
| 47. Upper edge of outlet opening | |
| 48. Outlet opening | |
| 49. Lower edge of outlet opening | |

## Claims

1. Animal shed system comprising
- an animal shed having an animal shed floor with a first and a second surface spaced apart, such that the floor has a thickness different from zero;
- a reservoir situated under the animal shed floor;
- a floor opening in the animal shed floor to allow manure to be dumped in the reservoir;
- a vehicle system comprising a manure-removal vehicle for removing manure from the animal shed floor and dumping the manure into the reservoir at the floor opening; and
- a device extending from the floor opening into the reservoir, the device forming a passageway between the floor opening and the reservoir, wherein the device is configured to prevent an airflow from the reservoir to the animal shed through the floor opening by blocking the passageway when in use.

2. System according to claim 1, wherein the device comprises a tube extending from the floor at the floor opening, and towards a bottom of the reservoir, wherein the tube has a free end ending at a distance different from zero from a bottom of the reservoir, the free end opening out into the reservoir, forming the passageway from the reservoir to the floor opening, wherein in use an airflow from the reservoir to the animal shed is prevented when a manure or feces level in the reservoir extends up to or into the tube through the free end.

3. System according to claim 1, wherein the device comprises a tube extending from the floor at the floor opening, and towards a bottom of the reservoir, wherein the tube has a free end ending at a distance different from zero from a bottom of the reservoir, wherein the tube has a base that closes off the free end, and forms a container with the peripheral sidewall that encloses an interior of the device, wherein the sidewall comprises an outlet opening towards the reservoir, the outlet opening being located at a distance from zero from the base; and the device further comprises a cover extending from the floor opening into the tube and covering the outlet opening and part of the base, wherein an end edge of the cover is at least at a same height as a lower edge of the outlet opening, which lower edge is at a distance different from zero from the base, thereby forming the passageway from the outlet opening to the floor opening, wherein in use the airflow from the reservoir to the animal shed is prevented when a manure or feces level in the tube is at least at a similar height as the end edge of the cover or higher, thereby blocking the passageway.

4. System according to claim 1, wherein the device comprises a tube (41) extending from the floor at the floor opening, and towards a bottom (21) of the reservoir, wherein the tube has a free end (42) ending at a distance different from zero from the bottom of the reservoir, the tube having a base (44) that closes off its free end, and forms a container with a peripheral sidewall (45) that encloses an interior of the device, wherein the sidewall comprises an outlet opening (48) towards the reservoir, wherein the outlet opening extends from the base towards the floor opening; and the device further comprises a cover (50) extending into the tube and covering the outlet opening and part of the base, thereby creating a passage (53) from the floor opening to the outlet opening, wherein the cover comprises a first portion (51) and a second portion (52), wherein the second portion is hingeably attached to the first portion, wherein in use the second portion rests against a lower edge (49) of the outlet opening and/or an amount of manure (8) in the passageway, thereby blocking the passageway from the animal shed to the reservoir and preventing an airflow from the reservoir to the animal shed through the floor opening.

5. System according to claim 3 or 4, wherein the cover covers the base fully along of one of a longitudinal direction and a transverse direction, and partly along another of the longitudinal direction and the transverse direction.

6. System according to claim 3, wherein the sidewall has at least two outlet openings at separate locations of the sidewall at the same height, and the cover is funnel shaped, and extends into the tube covering all outlet openings in the sidewall.

7. System according to any of claims 3 to 6, wherein the cover is removably assembled with the tube, such that the cover is removable for maintenance and/or replacement.

8. System according to any of claims 3 to 7, wherein the passageway is releasing towards the reservoir for any larger object that enters the device through the floor opening

9. System according to any of claims 3 to 8, wherein the end edge of the cover extends beyond the lower edge of the outlet opening.

10. System according to any of claims 3 to 9, wherein the outlet opening extends from the floor at the floor opening or from the sidewall of the tube at a location near the floor opening, towards the base.

11. System according to any of claims 3 to 10, wherein the tube comprises an upper part and a lower part, wherein at the lower part the sidewall converges towards the base.

12. System according to claim 11, wherein the lower edge of the outlet opening coincides with an upper edge of the lower part of the container.

13. System according to any of the preceding claims, wherein the device further comprises a grating provided over at least part of a cross sectional area of the device.

14. System according to any of the preceding claims, further comprising a safety structure that at least envelopes the floor opening, and is attached to the animal shed floor.

15. System according to any of the preceding claims, wherein the vehicle system further comprises a charging station for the manure removal vehicle.

16. System according to claim 14 and 15, wherein the charging station is provided at or on the safety structure, at a distance different from zero from the floor opening.
